## Europäisches Patentamt

## European Patent Office

## Office européen des brevets

(19)

(11) Veröffentlichungsnummer: **0 081 217**
**A1**

(12)                     **EUROPÄISCHE PATENTANMELDUNG**

(21) Anmeldenummer: **82111217.4**

(22) Anmeldetag: **03.12.82**

(51) Int. Cl.³: **G 05 B 19/18**

(30) Priorität: **07.12.81 DE 3148409**

(43) Veröffentlichungstag der Anmeldung:
**15.06.83 Patentblatt 83/24**

(84) Benannte Vertragsstaaten:
**CH DE FR GB LI SE**

(71) Anmelder: **Oerlikon-Boehringer GmbH**
**Stuttgarter Strasse 50 Postfach 220**
**D-7320 Göppingen(DE)**

(72) Erfinder: **Asal, Klaus**
**Ödachweg 9**
**D-7321 Börtlingen(DE)**

(72) Erfinder: **Honroth, Walter**
**Hölderlinweg 11**
**D-7320 Göppingen(DE)**

(74) Vertreter: **Vogeser, Werner, Dipl.-Ing. et al,**
**Patentanwälte Hansmann & Vogeser**
**Albert-Rosshaupter-Strasse 65**
**D-8000 München 70(DE)**

(54) **Automatische Korrektureinrichtung für Werkzeugrevolver an Drehmaschinen.**

(57) Die Erfindung betrifft eine automatische Korrektureinrichtung für Werkzeugrevolver an Drehmaschinen, insbes. NC-gesteuerten Drehmaschinen, bei denen Werkzeuge unterschiedlicher Art, zum Beispiel Innen- und Außendrehmeißel, auf wenigstens zwei Bezugsradien angeordnet sind und die Kenndaten jedes Werkzeuges in Abhängigkeit von der Lage der Arbeitsspitze durch einen Bezugspunkt am Werkzeughalter festliegen, die dadurch gekennzeichnet ist, daß am Anfang eines Arbeitsvorganges die neue Werkzeugposition, die auf dem Revolver die Art des Werkzeugs und den jeweiligen Bezugsradius festlegt, programmgesteuert eingegeben wird, daß der Abstand zwischen einem Revolverbezugspunkt und dem Werkzeugbezugspunkt auf dem zugehörigen Bezugsradius aus einem Speicher abgerufen wird, daß aus der Revolverausgangslage und dem Abstand des neuen Werkzeuges zwischen dem Revolverbezugspunkt und dem Werkzeugbezugspunkt ein Korrekturwert ermittelt wird, der der Differenz des Abstandes zwischen dem Revolverbezugspunkt und dem Werkzeugbezugspunkt des vorherigen Werkzeuges entspricht, und daß aus dem Korrekturwert und dem Lagesollwert die Verstellgröße für den Bearbeitungsvorgang ermittelt wird.

FIG. 1

Automatische Korrektureinrichtung für Werkzeugrevolver an Drehmaschinen

Die Erfindung betrifft eine automatische Korrektureinrichtung entsprechend dem Oberbegriff des Anspruches 1.

Bei automatisch schwenkenden Werkzeugrevolvern ist es bekannt, die Werkzeuge ausserhalb der Maschine auf entsprechenden Geräten in ihren Haltern voreinzustellen. Um auf dem Werkzeugrevolver möglichst viele Werkzeuge unterschiedlicher Art unterzubringen, sind diese auf unterschiedlichen Bezugsradien auf dem Revolver angeordnet.

Bei der Erstellung des jeweiligen Teileprogramms für ein bestimmtes Werkstück müssen ausser den Werkzeugmaßen, die für bestimmte Werkzeuge festliegen, auch die unterschiedlichen Bezugsradien am Werkzeugrevolver berücksichtigt werden, auf denen das entsprechende Werkzeug angeordnet ist. Diese unterschiedlichen Bezugsradien müssen bei der Programmerstellung in Betracht gezogen werden.

Der Erfindung liegt die Aufgabe zugrunde, die Programmerstellung dahingehend zu vereinfachen, dass bei der Programmerstellung nur die eigentlichen Werkzeugmaße, die durch Kenndaten festliegen, der Grundbezugspunkt der Maschine, der auf der Spindelnase liegt und der Revolverbezugspunkt, der zum Beispiel der Revolvermittelpunkt ist, berücksichtigt werden.

Gelöst wird diese Aufgabe gemäss der Erfindung durch die im kennzeichnenden Teil des Anspruches 1 angegebenen Merkmale.

Durch die vorgeschlagene Ausgestaltung wird am Beginn eines jeden Arbeitsvorganges die Position des nächstfolgenden Werkzeuges eingegeben. Aus dieser Positionsangabe kann ermittelt werden, auf welchem Bezugsradius das gewünschte Werkzeug liegt. Die Positionsangabe ermöglicht aber auch die Kenndaten des Werkzeuges zu ermitteln, d.h. die Lage der Arbeitsspitze, die in einer bestimmten Beziehung zu einem Werkzeugbezugspunkt liegt.

Mit der Eingabe der Position liegt also der Abstand zwischen dem Revolverbezugspunkt und dem Werkzeugbezugspunkt und damit auch die Lage der Arbeitsspitze fest. Aus der Lage der Arbeitsspitze, der Ausgangslage des Revolvers bei jedem Arbeitsvorgang, also der Lage, die er nach Beendigung eines Arbeitsvorganges einnimmt, und dem Lagesollwert, d.h. der Lage, die die Arbeitsspitze unmittelbar am Ende des spanabhebenden Vorganges einnimmt, kann dann diejenige Stellgrösse ermittelt werden, um die der Revolver relativ zum Werkstück verfahren werden muss.

Da die ermittelte Verstellgrösse allein aus der Positionsangabe und den gespeicherten Werkzeugkenndaten sowie dem Lagesollwert ermittelt werden kann, muss diese Grösse bei der Programmerstellung nicht mehr berücksichtigt werden.

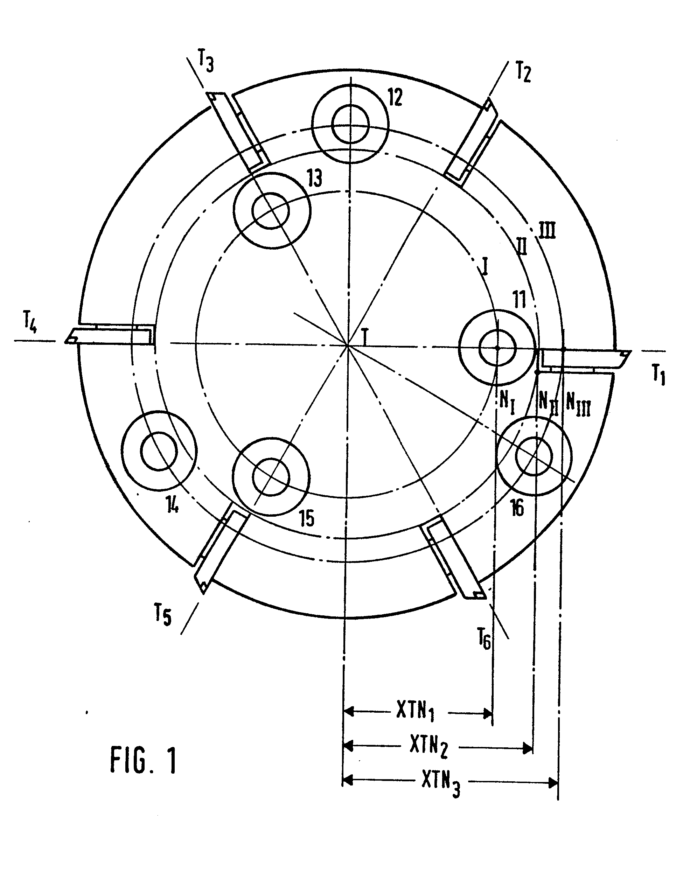

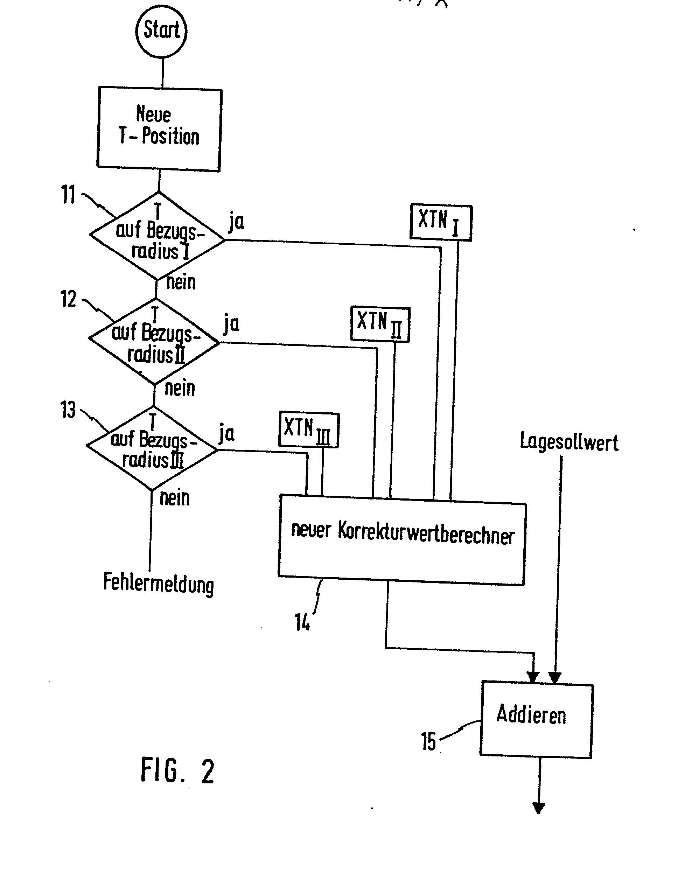

Die Erfindung wird nachstehend anhand der Fig. 1 und 2 beispielsweise erläutert.

Es zeigt:

Fig. 1 eine schematische Darstellung eines Revolvers einer
Werkzeugmaschine, und

Fig. 2 ein Blockschaltbild der automatischen Korrektureinrichtung.

Der in Fig. 1 gezeigte Revolver hat auf drei Bezugsradien I bis III schematisch dargestellte Aussen- und Innendrehmeissel. Jedem Werkzeug ist eine bestimmte Positionsnummer (1 bis 15) zugeordnet. Durch diese Positionsnummer liegt fest, welches Werkzeug auf welchem Bezugsradius liegt.

Zu jedem Werkzeug gehört ein bestimmter Werkzeugbezugspunkt $N_{I-III}$, durch den die Lage der Arbeitsspitze zu diesem Bezugspunkt festgelegt ist.

Aus der Positionsangabe, dem Werkzeugbezugspunkt, der Ausgangslage des Revolvers und dem Lageendwert des Werkzeugs kann mittels der in Fig. 2 gezeigten Einrichtung die Strecke ermittelt werden, die der Revolver in X-Richtung relativ zum Werkzeug verfahren werden muss, um in die neue Ausgangslage zu gelangen.

Nach Eingabe der neuen Position wird in logischen Verknüpfungsschaltungen 11 bis 13 ermittelt, auf welchem der Bezugsradien I bis III das Werkzeug liegt. In einem Korrekturwertrechner wird aus der jeweiligen Positionsangabe und dem Abstand zwischen dem Revolverbezugspunkt, zum Beispiel dem Revolvermittelpunkt T und dem Werkzeugbezugspunkt N ein Korrekturwert ermittelt, der die neue Revolverausgangslage bestimmt. In einem Addierer wird dann der Korrekturwert mit dem Lagesollwert, also dem Wert, den das Werkzeug am Ende seines spanabhebenden Vorganges erreichen soll, addiert.

PATENTANSPRÜCHE

1. Automatische Korrektureinrichtung für Werkzeugrevolver an Drehmaschinen, insbesondere NC-gesteuerten Drehmaschinen, bei denen Werkzeuge unterschiedlicher Art, zum Beispiel Innen- und Aussendrehmeissel, auf wenigstens zwei Bezugsradien angeordnet sind und die Kenndaten jedes Werkzeuges in Abhängigkeit von der Lage der Arbeitsspitze durch einen Bezugspunkt am Werkzeughalter festliegen, dadurch gekennzeichnet, dass

a) am Anfang eines Arbeitsvorganges die neue Werkzeugposition, die auf dem Revolver die Art des Werkzeuges und den jeweiligen Bezugsradius festlegt, programmgesteuert eingegeben wird,

b) der Abstand (zum Beispiel $XTN_I$) zwischen einem Revolver- bezugspunkt (T) und dem Werkzeugbezugspunkt (zum Beispiel $N_I$) auf dem zugehörigen Bezugsradius (zum Beispiel I) aus einem Speicher abgerufen wird,

c) aus der Revolverausgangslage und dem Abstand des neuen Werkzeuges zwischen dem Revolverbezugspunkt und dem Werkzeugbezugspunkt ein Korrekturwert ermittelt wird, der der Differenz des Abstandes zwischen dem Revolverbezugspunkt und dem Werkzeugbezugspunkt des vorherigen Werkzeuges entspricht, und

d) aus dem Korrekturwert und dem Lagesollwert die Verstellgrösse für den Bearbeitungsvorgang ermittelt wird.

2. Einrichtung nach Anspruch 1, dadurch gekennzeichnet, dass die Ausgangslage des Revolvers mindestens dem Abstand des Revolvers vom Werkstück gleich ist, der eine Drehung des Revolvers ohne Werkzeug- und Werkstückbeschädigung ermöglicht.

FIG. 1

FIG. 2

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 384 293  (FUJITSU FANUC) | 1 | G 05 B   19/18 |
| | --- | | |
| T | FR-A-2 492 716  (KABUSHIKI KAISHA) | 1 | |
| | ----- | | |

RECHERCHIERTE SACHGEBIETE (Int. Cl. ³)

G 05 B

Der vorliegende Recherchenbericht wurde für alle Patentansprüche erstellt.

| Recherchenort DEN HAAG | Abschlußdatum der Recherche 04-03-1983 | Prüfer BOGAERT F.L. |
|---|---|---|